# EUROPÄISCHE PATENTSCHRIFT

(11) **EP 1 527 044 B1**
(45) Veröffentlichungstag und Bekanntmachung des Hinweises auf die Patenterteilung: **14.11.2007**
(21) Anmeldenummer: 03766262.4
(22) Anmeldetag: 23.07.2003
(51) Int. Cl.: C07C 251/08, C08G 18/32

(54) **POLYALDIMINE**
POLYALDIMINES
POLYALDIMINES

(30) Priorität: 26.07.2002 EP 02016729
(43) Veröffentlichungstag der Anmeldung: 04.05.2005
(73) Patentinhaber: Sika Technology AG, 6340 Baar (CH)
(72) Erfinder: BURCKHARDT, Urs, CH-8057 Zürich (CH)
(74) Vertreter: Sika Patent Attorneys
(86) Internationale Anmeldenummer: PCT/EP2003/008040
(87) Internationale Veröffentlichungsnummer: WO 2004/013088

(56) Entgegenhaltungen:
- EP-A- 0 469 751
- DE-A- 3 306 373
- US-A- 4 059 549

## Beschreibung

### Technisches Gebiet und Stand der Technik

Die Erfindung betrifft neuartige Polyaldimine. Diese Polyaldimine sind geruchsfrei und sind erhältlich aus Polyaminen mit aliphatischen primären Aminogruppen, im Folgenden auch primäre aliphatische Polyamine genannt, und einem geruchsfreien Aldehyd. Durch die Hydrolyse der Polyaldimine bilden sich wieder die erwähnten Aldehyde und die erwähnten Polyamine.

Aldimine sind Substanzen einer an und für sich seit langem bekannten Stoffklasse, beschrieben beispielsweise bei R.W. Layer, Chem. Rev. 1963, 63, 489-510. Es ist bekannt, dass Aldimine bei Kontakt mit Wasser zu den entsprechenden Aldehyden und Aminen hydrolysieren können. In Abwesenheit von Wasser sind Aldimine äusserst stabile Verbindungen. Aufgrund dieser Eigenart werden sie beispielsweise eingesetzt, um Amine oder Aldehyde zu binden, beziehungsweise zu schützen. So werden, wie beispielsweise in US 3,420,800 und US 3,567,692 beschrieben, Aldimine in der Polyurethanchemie eingesetzt, wo sie in Kombination mit Isocyanaten stabile lagerfähige Zusammensetzungen ergeben. In solchen Zusammensetzungen werden die Aldimine auch als "latente Härter" bezeichnet, da sie in Gegenwart von Wasser (z.B. in Form von Feuchtigkeit aus der Luft) Amine freisetzen, welche mit den Isocyanaten reagieren und so zu einer Vernetzung führen können.

Aldehyde sind im allgemeinen äusserst geruchsintensive Substanzen, was für Personen, welche nahen Kontakt zu solchen Aldehyden haben, unangenehm ist und Kopfschmerzen, Übelkeit oder andere gesundheitliche Schwierigkeiten auslösen kann. Deshalb sind viele Aldehyde, beziehungsweise die davon abgeleiteten Aldimine, nur begrenzt einsetzbar, da stets auf eine gute Belüftung geachtet werden muss oder das Tragen eines Atemschutzes erforderlich ist.

Um solche Restriktionen bei der Anwendung zu vermeiden, besteht ein grosses Bedürfnis nach Polyaldiminen, welche geruchsfrei sind, und welche bei ihrer Hydrolyse ebenfalls geruchsfreie Aldehyde freisetzen.

Dem Fachmann ist klar, dass der Begriff "geruchsfrei" schwierig zu definieren ist. Er soll hier und im gesamten Dokument als "von menschlichen Individuen mit dem Geruchssinn nicht oder nur geringfügig wahrnehmbar (riechbar)" zu verstehen sein.

Es gab bisher verschiedene Versuche, den Geruch von Polyaldiminen bzw. der bei deren Hydrolyse freigesetzten Aldehyde zu reduzieren.

US 6,136,942 beschreibt einkomponentige Polyurethane, die 3-Phenyloxy-benzaldimine aliphatischer Polyamine und ähnliche Verbindungen enthalten, und die geruchsarm aushärten sollen. Der Geruch der beim Einsatz dieser Härter freigesetzten aromatischen Aldehyde ist jedoch deutlich wahrnehmbar und für viele Applikationen nicht tolerierbar.

US 4,469,831 beschreibt die Anwendung von 2,2-Dimethyl-3-(isobutyroxy)-propanaldiminen aliphatischer Polyamine als Härter für einkomponentige Polyurethane. Es werden Zusammensetzungen mit angeblich wenig Geruch erhalten. Der beim Einsatz der beschriebenen Polyaldimine freigesetzte Aldehyd verursacht jedoch einen lange anhaltenden, stechenden Geruch, welcher für viele Anwendungen nicht tolerierbar ist.

US 4,853,454 beschreibt unter anderem eine einkomponentige Polyurethanzusammensetzung, welche substituierte 2,2-Dimethylpropanaldimine aliphatisher, Polyamine enthält. Die bei der Hydrolyse der beschriebenen Polyaldimine freigesetzten Aldehyde sollen aufgrund ihres hohen Dampfdruckes zu angeblich sehr geruchsarmen Zusammensetzungen führen. Beim Einsatz der beschriebenen Polyaldimine treten aber auch hier unangenehme, über lange Zeit wahrnehmbare Gerüche auf, was diese Substanzen für geruchssensible Anwendungen ebenfalls ungeeignet macht.

US 4,720,535 beschreibt feuchtigkeitshärtende Polyurethanzusammensetzungen, welche substituierte 2,2-Dimethylpropanaldimine aromatischer Polyamine enthalten. Der Einsatz der beschriebenen Polyaldimine ist aufgrund der verwendeten aromatischen Polyamine ungeeignet. Einerseits sind aromatische Polyamine im allgemeinen deutlich toxischer als aliphatische, und andererseits sind Polyaldimine aromatischer Polyamine deutlich weniger reaktiv als solche von aliphatischen Polyaminen, sowohl in Bezug auf die Hydrolyse der Aldimingruppen als meist auch in Bezug auf eine nachfolgende Reaktion mit gegenüber Aminen reaktiven Komponenten. Zudem ist bekannt, dass sich aromatische Polyamine unter Lichteinfluss verfärben. Weiterhin verursachen die meisten der hier beschriebenen Aldehyde ebenfalls einen deutlich wahrnehmbaren bis starken Geruch.

Es stehen bisher keine Polyaldimine aliphatischer Polyamine zur Verfügung, welche geruchsfrei sind und bei der Hydrolyse geruchsfreie Aldehyde freisetzen.

### Aufgabe und Lösung

Aufgabe der vorliegenden Erfindung war es deshalb, geruchsfreie Polyaldimine zur Verfügung zu stellen, deren Aldimingruppen bei Kontakt mit Wasser rasch hydrolysieren und die dabei freigesetzten Aldehyde keinen wahrnehmbaren Geruch verursachen. Sowohl die Polyaldimine als auch deren Hydrolyseprodukte sollen toxikologisch möglichst unbedenklich sein.

Überraschenderweise wurde gefunden, dass die vorher genannte Aufgabe durch Polyaldimine gemäss Anspruch 1 gelöst werden kann. Die erfindungsgemässen Polyaldimine sind aus mindestens einem Polyamin mit aliphatischen primären Aminogruppen und mindestens einem Aldehyd gemäss der später spezifizierten Formel erhältlich.

Überraschend und für den Fachmann nicht naheliegend ist die Tatsache, dass solche Polyaldimine eine genügend hohe Reaktivität als Härter für Systeme mit gegenüber Aminen reaktiven Komponenten aufweisen. Der Fachmann würde erwarten, dass solche Polyaldimine aufgrund ihrer hydrophoben Struktur für das für die Hydrolyse der Aldimingruppen erforderliche Wasser schlecht zugänglich sind, und dass deren Hydrolyse deshalb nur langsam und unvollständig abläuft. Wider Erwarten hydrolysieren solche Polyaldimine bei Kontakt mit Feuchtigkeit jedoch schnell und vollständig. Ihre Reaktivität ist vergleichbar mit jener von wesentlich weniger hydrophoben Polyaldiminen, wie sie beispielsweise in US 4,469,831 beschrieben sind.

Die Herstellung der für die Polyaldimine verwendeten Aldehyde verwendet leicht zugängliche, kostengünstige Rohstoffe und gelingt überraschend einfach durch die Veresterung von schwerflüchtigen Carbonsäuren, beispielsweise langkettigen Fettsäuren, mit β-Hydroxyaldehyden, insbesondere 3-Hydroxypivalaldehyd. Überraschenderweise lässt sich dieser Reaktionsschritt lösemittelfrei durchführen. Die so erhaltenen Aldehyde sind bei Raumtemperatur je nach verwendeter Carbonsäure fest oder flüssig. Sie können anschliessend gut mit Polyaminen zu den entsprechenden Polyaldiminen umgesetzt werden. Da der gesamte Herstellungsprozess lösemittelfrei durchgeführt werden kann, entfällt ein destillatives Entfernen von Lösemitteln, was einerseits den Herstellungsprozess vereinfacht, und andererseits vermeidet, dass allfällige Lösemittelrückstände im Polyaldimin einen störenden Geruch verursachen können.

Schliesslich wurde gefunden, dass die erfindungsgemässen Polyaldimine geeignet sind für den Einsatz in feuchtigkeitsreaktiven Zusammensetzungen, welche gegenüber Aminen reaktive Komponenten enthalten. Diese Zusammensetzungen sind unter Ausschluss von Feuchtigkeit lagerstabil.

### Zusammenfassung der Erfindung

Die vorliegende Erfindung betrifft Polyaldimine, welche erhältlich sind aus mindestens einem Polyamin **A** mit aliphatischen primären Aminogruppen und mindestens einem Aldehyd **B**. Diese Polyaldimine, wie auch die bei ihrer Hydrolyse entstehenden Aldehyde **B**, sind geruchsfrei. Weiterhin offenbart sind Verfahren zur Herstellung dieser Polyaldimine und Aldehyde **B**, sowie Verfahren zur Hydrolyse der Polyaldimine.

Schliesslich wird die Verwendung dieser Polyaldimine in Zusammensetzungen als Klebstoff, Dichtstoff, Beschichtung oder Belag beschrieben.

Die erfindungsgemässen Polyaldimine zeichnen sich dadurch aus, dass sie geruchsfrei sind, bei Kontakt mit Wasser rasch hydrolysieren, während und nach ihrer Hydrolyse keinen wahrnehmbaren Geruch verursachen, sowie in Zusammensetzungen, welche gegenüber Aminen reaktive Komponenten enthalten, unter Ausschluss von Wasser lagerstabil sind.

### Ausführliche Beschreibung der Erfindung

Die vorliegende Erfindung betrifft Polyaldimine, welche erhältlich sind aus mindestens einem Polyamin A mit aliphatischen primären Aminogruppen und mindestens einem Aldehyd B mit der Formel (I): 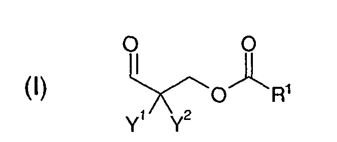 wobei Y¹ und Y² einerseits unabhängig voneinander eine Alkyl-, Aryl- oder Arylalkylgruppe darstellen, welche gegebenenfalls jeweils substituiert sein können, gegebenenfalls jeweils Heteroatome enthalten können und gegebenenfalls jeweils ungesättigte Anteile enthalten können. Bevorzugt sind Y¹ = Y² = Methyl.

Andererseits können Y¹ und Y² miteinander zu einem carbocyclischen oder heterocyclischen Ring verbunden sein, welcher eine Ringgrösse zwischen 5 und 8, bevorzugt 6, Atomen, und gegebenenfalls eine oder zwei einfach ungesättige Bindungen aufweist.

Der Rest R¹ steht entweder für eine lineare oder verzweigte Alkylkette mit 11 bis 30 C-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 C-Atomen, oder für einen Rest der Formel (II) oder (III).

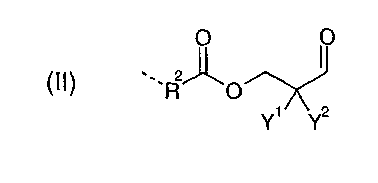

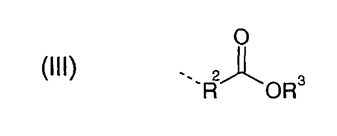

In den Formeln (II) und/oder (III) stehen R² für eine lineare oder verzweigte oder cyclische Alkylenkette mit 2 bis 16 C-Atomen, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette mit 2 bis 16 C-Atomen, und R³ für eine lineare oder verzweigte Alkylkette mit 1 bis 8 C-Atomen. Y¹ und Y² weisen die bereits genannte Bedeutung auf, und die gestrichelten Linien in den Formeln bezeichnen die Verbindungsstellen.
Unter "Poly" in "Polyaldimin" oder "Polyamin" werden Moleküle verstanden, die formal zwei oder mehr der jeweiligen funktionellen Gruppen enthalten.
Der Begriff "Polyamine mit aliphatischen primären Aminogruppen" bezeichnet im vorliegenden Dokument stets Verbindungen, die formal zwei oder mehr NH₂-Gruppen enthalten, die an einen aliphatischen, cycloaliphatischen oder arylaliphatischen Rest gebunden sind. Sie unterscheiden sich damit von den aromatischen Aminen, in welchen die Aminogruppen direkt an einen aromatischen Rest gebunden sind, wie beispielsweise in Anilin oder 2-Aminopyridin.

Das Polyaldimin ist herstellbar aus mindestens einem Polyamin **A** mit aliphatischen primären Aminogruppen und mindestens einem Aldehyd **B** durch eine Kondensationsreaktion unter Abspaltung von Wasser. Solche Kondensationsreaktionen sind bestens bekannt und beschrieben, beispielsweise in Houben-Weyl, "Methoden der organischen Chemie", Vol. XI/2, Seite 73 ff. Der Aldehyd **B** wird hierbei in Bezug auf die primären Aminogruppen des Polyamins **A** stöchiometrisch oder in stöchiometrischem Überschuss eingesetzt.
Üblicherweise werden solche Kondensationsreaktionen in Anwesenheit eines Lösemittels durchgeführt, mittels welchem das bei der Reaktion entstehende Wasser azeotrop entfernt wird. Zur Herstellung der erfindungsgemässen Polyaldimine wird jedoch ein Herstellverfahren ohne Verwendung von Lösemitteln bevorzugt, wobei das bei der Kondensation gebildete Wasser direkt mittels Vakuum aus der Reaktionsmischung entfernt wird. Durch die lösemittelfreie Herstellung erübrigt sich ein Abdestillieren des Lösemittels nach erfolgter Herstellung, was den Herstellungsprozess vereinfacht. Zudem ist das Polyaldimin so frei von Lösemittelrückständen, welche allenfalls einen störenden Geruch verursachen könnten.

Als Polyamin **A** mit aliphatischen primären Aminogruppen zur Herstellung des Polyaldimins sind übliche Polyamine geeignet, wie sie beispielsweise in der Polyurethan- oder Epoxychemie verwendet werden. Als Beispiele seien die folgenden erwähnt: Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine^{®} (hergestellt von Huntsman Chemicals), sowie Mischungen der vorgenannten Polyamine.

Bevorzugte Polyamine sind 1,6-Hexamethylendiamin, MPMD, DAMP, 2,2,4- und 2,4,4-Trimethylhexamethylendiamin, 4-Aminomethyl-1,8-octandiamin, IPDA, 1,3- und 1,4-Xylylendiamin, 1,3- und 1,4-Bis-(aminomethyl)-cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, Polyoxyalkylen-Polyamine mit theoretisch zwei oder drei Aminogruppen, insbesondere Jeffamine^{®} EDR-148, Jeffamine^{®} D-230, Jeffamine^{®} D-400 und Jeffamine^{®} T-403, sowie insbesondere Mischungen von zwei oder mehr der vorgenannten Polyamine.

Für die Herstellung des Polyaldimins wird mindestens ein Aldehyd **B** eingesetzt mit der Formel (I):

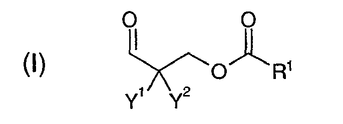

In einer bevorzugten Herstellmethode des Aldehyds **B** wird ausgegangen von einem β-Hydroxyaldehyd gemäss Formel (IV), welcher beispielsweise aus Formaldehyd (oder Paraformaldehyd oder oligomeren Formen von Formaldehyd, wie 1,3,5-Trioxan) und einem Aldehyd gemäss Formel (V) in einer gekreuzten Aldol-Addition, gegebenenfalls in situ, hergestellt werden kann.

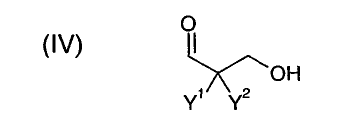

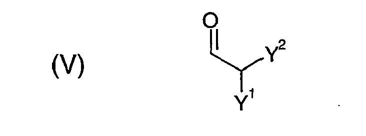

Der β-Hydroxyaldehyd gemäss Formel (IV) wird mit einer Carbonsäure zum entsprechenden Ester umgesetzt, nämlich entweder mit einer langkettigen Fettsäure R¹-COOH zum entsprechenden Fettsäureester; und / oder mit einem Dicarbonsäuremonoalkylester HOOC-R²-COOR³ zum Aldehyd **B** mit dem Rest nach Formel (III); und / oder mit einer Dicarbonsäure HOOC-R²-COOH zum Aldehyd **B,** in diesem Falle ein Dialdehyd, mit dem Rest nach Formel (II). Die Formeln (II) und (III) und R¹, R² und R³ haben dabei die bereits beschriebene Bedeutung. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.
Üblicherweise werden solche Veresterungsreaktionen in Anwesenheit eines Lösemittels durchgeführt, welches nach erfolgter Umsetzung beispielsweise mittels Destillation wieder entfernt wird, eventuell zusammen mit bei der Veresterung nicht umgesetztem überschüssigem Alkohol. Bei einem bevorzugten Verfahren zur Herstellung des Aldehyds **B** wird jedoch ganz ohne Lösemittel gearbeitet. Dabei wird der β-Hydroxyaldehyd nach Formel (IV) ohne Verwendung von Lösemitteln direkt mit der Carbonsäure oder dem Carbonsäuregemisch umgesetzt, wobei das bei der Veresterung gebildete Wasser im Vakuum entfernt wird. Da die für die Veresterung verwendeten Carbonsäuren nahezu geruchlos sind, verursachen Spuren davon in den Polyaldiminen ebenfalls keinen störenden Geruch. Deshalb und wegen der lösemittelfreien Herstellung kann darauf verzichtet werden, die Aldehyde nach ihrer Herstellung mittels aufwändigen Verfahren, wie beispielsweise durch Rektifikation oder Kristallisation, zu reinigen, was den Herstellungsprozess sehr vereinfacht.
Selbstverständlich sind auch Veresterungsreaktionen unter Verwendung von Lösemitteln möglich; sie sind aber nicht bevorzugt, weil dadurch ein nachfolgendes aufwändiges Abtrennen des Lösemittels erforderlich ist, beziehungsweise die Polyaldimine aufgrund von Lösemittelrückständen nicht geruchsfrei hergestellt werden können.

Im Fall der Verwendung von Dicarbonsäuren wird ein Gemisch aus Aldehyden **B** mit den Resten nach Formel (II) und nach Formel (III) erhalten, wenn beispielsweise zuerst ein Teil der Carbonsäuregruppen mit dem β-Hydroxyaldehyd nach Formel (IV) verestert wird, und anschliessend die restlichen Carbonsäuregruppen mit einem Alkylalkohol (R³-OH) verestert werden. Ein solches Gemisch kann zur Herstellung des Polyaldimins direkt weiterverwendet werden.

Bevorzugte Aldehyde nach Formel (V) zur Umsetzung mit Formaldehyd zu β-Hydroxyaldehyden nach Formel (IV) sind die folgenden: Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd und Diphenylacetaldehyd. Besonders bevorzugt ist Isobutyraldehyd.

Bevorzugte β-Hydroxyaldehyde nach Formel (IV) sind die Produkte aus der Umsetzung von Formaldehyd mit den vorgängig als bevorzugt genannten Aldehyden nach Formel (V). Besonders bevorzugt ist 3-Hydroxypivalaldehyd.

Als geeignete Carbonsäuren zur Veresterung mit den β-Hydroxyaldehyden nach Formel (IV) seien beispielsweise die folgenden erwähnt: Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, dehydrierte Ricinolsäuren, sowie Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl.

Bevorzugt sind Laurinsäure, Myristinsäure, Palmitinsäure, Stearinsäure, Ölsäure, Linolsäure, Linolensäure, Bernsteinsäure, Adipinsäure, Azelainsäure und Sebacinsäure und technische Gemische von Fettsäuren, welche diese Säuren enthalten.

Durch die Umsetzung mindestens eines Polyamins **A** mit aliphatischen primären Aminogruppen mit mindestens einem Aldehyd **B** entstehen beispielsweise Polyaldimine der schematischen Formeln (VI) und (VII) 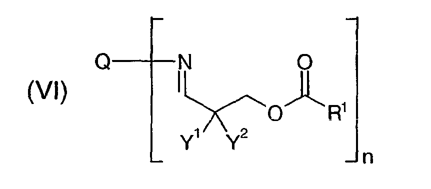 wobei n für 2, 3 oder 4 steht und Q den Rest eines Polyamins **A** mit aliphatischen primären Aminogruppen nach Entfernung aller primären Aminogruppen darstellen soll; und 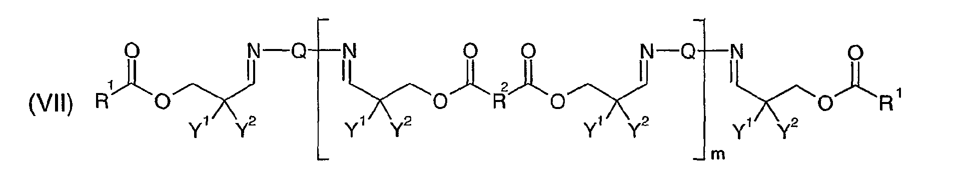 wobei m für eine ganze Zahl von 0 bis 10 steht und Q in demselben Molekül gleich oder verschieden ist und jeweils den Rest eines Polyamins **A** mit aliphatischen primären Aminogruppen nach Entfernung aller primären Aminogruppen darstellen soll. Die Reste Y¹, Y², R¹ und R² in den Formeln (VI) und (VII) haben dabei die bereits beschriebene Bedeutung.

Wird ein Dialdehyd **B** mit dem Rest nach Formel (II) für die Herstellung eines Polyaldimins verwendet, so wird dieser vorteilhaft entweder in einer Mischung mit einem Monoaldehyd **B** eingesetzt, und zwar in einem solchen Mengenverhältnis, dass für das Polyaldimin aus Formel (VII) für m im Mittel Werte im Bereich von 1 bis 10 erhalten werden; oder er wird so dosiert, dass ein Überschuss an Aldehydgruppen im Verhältnis zu den Aminogruppen bei der Herstellung des Polyaldimins vorhanden ist, wobei der Aldehyd-Überschuss so gewählt wird, dass für das Polyaldimin aus Formel (VII) für m ebenfalls im Mittel Werte im Bereich von 1 bis 10 erhalten werden. Auf beide Arten wird ein Gemisch oligomerer Polyaldimine mit einer gut handhabbaren Viskosität erhalten.

Als Polyaldimin können auch Mischungen verschiedener Polyaldimine verwendet werden, insbesondere auch Mischungen verschiedener Polyaldimine hergestellt mit Hilfe von verschiedenen Polyaminen **A** mit primären aliphatischen Aminogruppen, umgesetzt mit verschiedenen oder gleichen Aldehyden **B**, insbesondere auch Mischungen von Polyaldiminen hergestellt mit Hilfe von Polyaminen mit unterschiedlicher Anzahi primärer aliphatischer Aminogruppen, d.h. verschiedener Werte für n.

Die erfindungsgemässen Polyaldimine sind geruchsfrei. Die Polyaldimine sind unter Ausschluss von Feuchtigkeit lagerstabil, allein oder auch in Kombination mit gegenüber Aminen reaktiven Komponenten, wie beispielsweise Isocyanaten. Bei Kontakt mit Wasser findet schnell eine Hydrolyse statt, bei welcher aliphatische Polyamine und Aldehyde freigesetzt werden. Wasser kann hierbei im flüssigen oder gasförmigen Aggregatszustand mit dem Polyaldimin in Kontakt gebracht werden. So kann in einem solchen Hydrolyseverfahren beispielsweise Wasser in Form von Luftfeuchtigkeit auf das Polyaldimin oder eine Polyaldimin enthaltende Zusammensetzung einwirken. Ein weiteres Beispiel einer solchen Kontaktierung ist das Einmischen von Wasser oder einer Wasser enthaltenden Komponente oder einer Wasser freisetzenden Komponente.
Die Reaktion von gegenüber Aminen reaktiven Komponenten mit einem Polyaldimin, welches einer Hydrolyse unterzogen wird, muss dabei nicht notwendigerweise über die Stufe des Polyamins erfolgen. Selbstverständlich sind auch Reaktionen mit Zwischenstufen der Hydrolyse des Polyaldimins zum Polyamin möglich. Beispielsweise ist es denkbar, dass das hydrolysierende Polyaldimin in der Form eines Halbaminals direkt mit den gegenüber Aminen reaktiven Komponenten reagiert.

Die erfindungsgemässen Polyaldimine finden unter anderem Verwendung als Quelle für Polyamine. Beispielsweise können solche Polyaldimine in Zusammensetzungen verwendet werden, welche gegenüber Aminen reaktive Komponenten enthalten, wie zum Beispiel Isocyanatgruppen aufweisende Verbindungen. Bei Kontakt mit Wasser werden Polyamine freigesetzt, welche in der oben beschriebenen Weise mit den erwähnten, gegenüber Aminen reaktiven Komponenten reagieren und diese beispielsweise vernetzen.

Die erfindungsgemässen Polyaldimine eignen sich besonders gut als Härter für den Einsatz in Klebstoffen, Dichtstoffen, Beschichtungen, Schäumen, Anstrichen und Bodenbelägen.

Besonders gut geeignet sind die Polyaldimine für Isocyanatgruppenhaltige Zusammensetzungen, und zwar sowohl in einkomponentigen Systemen als feuchtigkeitsreaktive latente Härter, als auch in zweikomponentigen Systemen als verzögert reagierende Härter, deren vor der Härtungsreaktion zu erfolgende hydrolytische Aktivierung, beispielsweise durch Luftfeuchtigkeit, lange Verarbeitungszeiten (Topfzeiten) ermöglicht.

Mit Vorteil werden die erfindungsgemässen Polyaldimine vor allem in solchen Anwendungen eingesetzt, die keinerlei Geruchsbelastung durch das Produkt erlauben, weder vor, noch während oder nach dessen Applikation. Selbstverständlich können die erfindungsgemässen Polyaldimine auch überall dort eingesetzt werden, wo der Geruch keine entscheidende Rolle spielt.

### Beispiele

Alle Prozent-Angaben beziehen sich, wo nicht anders angegeben, auf Gewichts-Prozente.

### Verwendete Polyamine:

alpha, omega-Polyoxypropylendiamin (Jeffamine^{®} D-230, Huntsman): Totaler Gehalt an primären Aminen ≥ 97%; Amin-Gehalt = 8.22 mmol NH₂/g.

1,3-Xylylendiamin (MXDA; Mitsubishi Gas Chemical): Gehalt MXDA ≥ 99%; Amin-Gehalt = 14.56 mmol NH₂/g.

1,6-Hexamethylendiamin (HDA): Gehalt HDA ≥ 99.0%; Amin-Gehalt = 17.21 mmol NH₂/g.

1,5-Diamino-2-methylpentan (MPMD; DuPont): Gehalt MPMD ≥ 98.5%; Amin-Gehalt = 17.11 mmol NH₂/g.

### Verwendete Polyole:

Acclaim^{®} 4200 N (Bayer): Lineares Polypropylenoxid-Polyol mit theoretischer OH-Funktionalität 2, mittlerem Molekulargewicht ca. 4000, OH-Zahl ca. 28 mg KOH/g, Ungesättigtheitsgrad ca. 0.005 mEq/g.

Caradol^{®} MD34-02 (Shell): Nichtlineares Polypropylenoxidpolyethylenoxid-Polyol, Ethylenoxid-terminiert, mit theoretischer OH-Funktionalität 3, mittlerem Molekulargewicht ca. 4900, OH-Zahl ca. 35 mg KOH/g, Ungesättigtheitsgrad ca. 0.08 mEq/g.

### Beschreibung der Prüfmethoden:

Die Infrarotspektren wurden auf einem FT-IR Gerät 1600 von Perkin-Elmer gemessen (horizontale ATR-Messeinheit mit ZnSe-Kristall); die Proben wurden unverdünnt als Filme aufgetragen. Die Absorptionsbanden sind in Wellenzahlen (cm⁻¹) angegeben.

Die Viskosität wurde bei 20 °C auf einem Kegel-Platten-Viskosimeter der Fa. Haake (PK100 / VT-500) gemessen.

Die Hautbildungszeit (Zeit bis zur Klebefreiheit, "tack-free time") wurde bestimmt bei 23 °C und 50% relativer Luftfeuchtigkeit.

Zugfestigkeit und Bruchdehnung wurden bestimmt an während 7 Tagen bei 23 °C und 50% relativer Luftfeuchtigkeit ausgehärteten Filmen nach DIN EN 53504 (Zuggeschwindigkeit: 200 mm/min).

Die Blasenbildung wurde qualitativ beurteilt anhand der Menge der Blasen, die während der Aushärtung (7 Tage bei 23 °C und 50% relativer Luftfeuchtigkeit) der für die mechanischen Prüfungen verwendeten Filme (Schichtdicke 2 mm) auftraten.

Der Geruch der Aldehyde bzw. der Polyaldimine bzw. der Zusammensetzungen wurde beurteilt durch Riechen mit der Nase im Abstand von 10 cm an dem bei Raumtemperatur als Film aufgetragenen Material. Für Zusammensetzungen wurde dies ein erstes Mal an dem unmittelbar zuvor applizierten Material und ein zweites Mal 7 Tage danach an dem bei 23 °C und 50% relativer Luftfeuchtigkeit ausgehärteten Material vorgenommen.

Die Hydrolyse der Polyaldimine wurde durchgeführt, indem zu jeweils 10 mL Polyaldimin die bezogen auf die Aldimingruppen stöchiometrische Menge an 0.1 N HCl gegeben und kurz eingemischt wurde. Nach einer Stunde wurde der Geruch des hydrolysierten Polyaldimins beurteilt durch Riechen mit der Nase im Abstand von 10 cm an dem bei Raumtemperatur als Film aufgetragenen Material.

### Herstellung der Polyaldimine

Für die Herstellung der Polyaldimine PA1 bis PA7 wurden die Aldehyde A1 bis A6 verwendet, deren Herstellung nachfolgend beschrieben ist:

### Beispiel 1 (Aldehyd A1)

In einen Rundkolben mit Rückflusskühler, Thermometer und Wasserabscheider (Dean Stark) wurden 40.5 g Formaldehyd (37% in Wasser, methanolfrei), 36.0 g Isobutyraldehyd, 100.0 g Laurinsäure und 1.0 g 4-Toluolsulfonsäure eingewogen und unter Stickstoffatmosphäre gestellt. Die Mischung wurde im Ölbad unter kräftigem Rühren auf 90°C erwärmt, bis die Rückflussgeschwindigkeit merklich abgenommen hatte. Darauf wurde die Badtemperatur auf 120°C erhöht und die Mischung bis zur Temperaturkonstanz am Rückfluss gekocht. Dann wurde die Rückflusskühlung ausgeschaltet und die Badtemperatur auf 140 °C erhöht, worauf sich Wasser abzuscheiden begann. Nach zwei Stunden wurde die Badtemperatur auf 170 °C erhöht und die Apparatur im Wasserstrahlvakuum während 90 Minuten evakuiert. Es sammelten sich insgesamt rund 35 mL Destillat im Abscheider. Das Reaktionsgemisch wurde auf Raumtemperatur abgekühlt und unter Stickstoffatmosphäre aufbewahrt. Das so erhaltene Produkt, ein dünnflüssiges, hellorange gefärbtes und geruchsfreies Öl, wurde massenspektroskopisch als 2,2-Dimethyl-3-oxo-propyl-laurat identifiziert. Ausbeute: 140 g.
IR: 2954, 2923, 2853, 2707 (CHO), 1733 (C=O), 1466, 1418, 1402, 1375, 1248, 1234, 1157, 1112, 1023, 998, 938, 892, 774, 722.

### Beispiel 2 (Aldehyd A2)

Wie für Aldehyd A1 beschrieben wurden 42.8 g Formaldehyd (37% in Wasser, methanolfrei), 38.0 g Isobutyraldehyd, 150.0 g Stearinsäure und 1.0 g 4-Toluolsulfonsäure unter Abscheidung von rund 37 mL Wasser umgesetzt. Das so erhaltene Produkt, eine bei Raumtemperatur feste, hellorange gefärbte und geruchsfreie Masse, wurde massenspektroskopisch als 2,2-Dimethyl-3-oxopropyl-stearat identifiziert. Ausbeute: 192 g.
IR: 2955, 2915, 2849, 2712 (CHO), 1732 (C=O), 1468, 1416, 1378, 1311, 1293, 1273, 1255, 1235, 1215, 1193, 1166, 1104, 1018, 988, 940, 892, 810, 777, 720.

### Beispiel 3 (Aldehyd A3)

In einen Rundkolben mit Rückflusskühler, Thermometer und Wasserabscheider (Dean Stark) wurden 11.0 g Paraformaldehyd, 40.0 g 2-Methylvaleraldehyd, 64.0 g Laurinsäure und 0.5 g 4-Toluolsulfonsäure eingewogen und unter Stickstoffatmosphäre gestellt. Die Mischung wurde im Ölbad unter kräftigem Rühren auf 100 °C erwärmt, bis die Rückflussgeschwindigkeit merklich abgenommen hatte. Darauf wurde die Rückflusskühlung ausgeschaltet, die Badtemperatur auf 130 °C erhöht, worauf sich Wasser abzuscheiden begann. Nach 30 Minuten wurde die Badtemperatur auf 170°C erhöht und die Apparatur im Wasserstrahlvakuum während 90 Minuten evakuiert. Es sammelten sich insgesamt rund 14 mL Destillat im Abscheider. Das Reaktionsgemisch wurde daraufhin im Hochvakuum rektifiziert. Das so erhaltene Produkt, ein dünnflüssiges, farb- und geruchsfreies Öl (Siedepunkt 143 °C bei 0.1 mbar), wurde massenspektroskopisch als 2-Methyl-2-propyl-3-oxo-propyl-laurat identifiziert. Ausbeute: 70.0 g.
IR: 2956, 2923, 2852, 2706 (CHO), 1734 (C=O), 1466, 1417, 1398, 1378, 1347, 1233, 1156, 1112, 1074, 1011, 975, 934, 919, 885, 856, 777, 739, 722.

### Beispiel 4 (Aldehydgemisch A4)

Wie für Aldehyd A1 beschrieben wurden 60.2 g Formaldehyd (37% in Wasser, methanolfrei), 53.5 g Isobutyraldehyd, 100.0 g Sebacinsäure und 1.0 g 4-Toluolsulfonsäure unter Abscheidung von rund 52 mL Wasser umgesetzt. Das dabei erhaltene Reaktionsgemisch wurde auf 100 °C abgekühlt, mit 19.0 g n-Butanol versetzt, 30 Minuten bei 100 °C gerührt und dann die Badtemperatur wieder auf 140 °C erhöht, worauf sich erneut Wasser abzuscheiden begann. Nach einer Stunde wurde die Badtemperatur auf 170 °C erhöht und die Apparatur im Wasserstrahlvakuum während 90 Minuten evakuiert. Es sammelten sich insgesamt rund 57 mL (52 mL + 5 mL) Destillat im Abscheider. Das so erhaltene Produkt, ein hellorange gefärbtes und geruchsfreies Öl, bestand aus einem Gemisch von Bis-(2,2-dimethyl-3-oxo-propyl)-sebacat, Butyl-(2,2-dimethyl-3-oxo-propyl)-sebacat und Dibutylsebacat (Identifizierung mittels GC-MS). Ausbeute: 168 g.
IR: 2933, 2855, 2708 (CHO), 1731 (C=O), 1465, 1369, 1240, 1161, 1099, 1026, 937, 893, 774, 726.

### Beispiel 5 (Aldehydgemisch A5)

Wie für Aldehyd A1 beschrieben wurden 22.3 g Paraformaldehyd, 53.5 g Isobutyraldehyd, 49.5 g Laurinsäure, 50.0 g Sebacinsäure und 1.0 g 4-Toluolsulfonsäure unter Abscheidung von knapp 14 mL Wasser umgesetzt. Das so erhaltene Produkt, ein hellorange gefärbtes und geruchsfreies Öl, bestand aus einem Gemisch von 2,2-Dimethyl-3-oxo-propyl-laurat und Bis-(2,2-dimethyl-3-oxo-propyl)-sebacat (Identifizierung mittels GC-MS). Ausbeute: 161 g.

### Beispiel 6 (Aldehyd A6)

In einen Rundkolben mit Thermometer und Wasserabscheider (Dean Stark) wurden 51.0 g 3-Hydroxypivalaldehyd (dimere Form), 100.0 g Laurinsäure und 1.0 g 4-Toluolsulfonsäure eingewogen und unter Stickstoffatmosphäre gestellt. Die Mischung wurde im Ölbad unter kräftigem Rühren auf 140 °C erwärmt, worauf sich Wasser abzuscheiden begann. Nach zwei Stunden wurde die Badtemperatur auf 170°C erhöht und die Apparatur im Wasserstrahlvakuum während 90 Minuten evakuiert. Es sammelten sich insgesamt gut 9 mL Destillat im Abscheider. Das Reaktionsgemisch wurde dann auf Raumtemperatur abgekühlt und unter Stickstoffatmosphäre aufbewahrt. Das so erhaltene Produkt, ein dünnflüssiges, hellorange gefärbtes und geruchsfreies Öl, wurde massenspektroskopisch als 2,2-Dimethyl-3-oxopropyl-laurat identifiziert und unterschied sich nicht von Aldehyd A1 aus Beispiel 1. Ausbeute: 141 g.

### Beispiel 7 (Polyaldimin PA1)

In einen Rundkolben wurden 140.0 g Aldehyd A1 eingewogen, unter Stickstoffatmosphäre gestellt und der Kolben mittels eines Wasserbades gekühlt. Unter kräftigem Rühren und unter fortgesetzter Kühlung wurden 48.6 g Jeffamine^{®} D-230 so langsam aus einem Eintropftrichter zugegeben, dass die Temperatur der Mischung nicht über 40°C stieg. Danach wurden die flüchtigen Bestandteile im Wasserstrahlvakuum bei 80 °C vollständig abdestilliert. Das so erhaltene, bei Raumtemperatur flüssige Reaktionsprodukt war völlig geruchsfrei und wies einen Aldimin-Gehalt, bestimmt als Amin-Gehalt, von 2.17 mmol NH₂/g und eine Viskosität bei 20°C von 700 mPa·s auf.
IR: 2956, 2923, 2853, 1738 (C=O), 1667 (C=N), 1466, 1375, 1344, 1250, 1236, 1155, 1109, 1023, 1006, 932, 873, 722.

### Beispiel 8 (Polyaldimin PA2)

Wie für Polyaldimin PA1 beschrieben wurden 192.0 g Aldehyd A2 mit 57.0 g Jeffamine^{®} D-230 umgesetzt. Nach Entfernen der flüchtigen Bestandteile bei 80 °C im Wasserstrahlvakuum erhielt man ein bei Raumtemperatur cremefestes Reaktionsprodukt, das völlig geruchsfrei war und einen Aldimin-Gehalt, bestimmt als Amin-Gehalt, von 1.93 mmol NH₂/g aufwies.
IR: 2956, 2919, 2851, 1739 (C=O), 1667 (C=N), 1467, 1396, 1375, 1247, 1157, 1111, 1021, 1003, 932, 873, 721.

### Beispiel 9 (Polyaldimin PA3)

Wie für Polyaldimin PA1 beschrieben wurden 30.0 g Aldehyd A3 mit 7.6 g HDA umgesetzt. Nach Entfernen der flüchtigen Bestandteile bei 80 °C im Wasserstrahlvakuum erhielt man ein farbloses, bei Raumtemperatur flüssiges Reaktionsprodukt, das völlig geruchsfrei war und einen Aldimin-Gehalt, bestimmt als Amin-Gehalt, von 2.72 mmol NH₂/g aufwies.
IR: 2955, 2922, 2852, 1737 (C=O), 1667 (C=N), 1466, 1419, 1376, 1343, 1233, 1162, 1112, 1070, 1021, 1008, 939, 885, 863, 740, 722.

### Beispiel 10 (Polyaldimin PA4)

Wie für Polyaldimin PA1 beschrieben wurden 168.0 g Aldehydgemisch A4 mit 72.0 g Jeffamine^{®} D-230 umgesetzt. Nach Entfernen der flüchtigen Bestandteile bei 80°C im Wasserstrahlvakuum erhielt man ein bei Raumtemperatur flüssiges Reaktionsprodukt, das völlig geruchsfrei war und einen Aldimin-Gehalt, bestimmt als Amin-Gehalt, von 2.49 mmol NH₂/g und eine Viskosität bei 20 °C von 6'700 mPa·s aufwies.
IR: 2964, 2928, 2855, 1734 (C=O), 1667 (C=N), 1458, 1374, 1243, 1160, 1106, 1020, 934, 874, 726.

### Beispiel 11 (Polyaldimin PA5)

Wie für Polyaldimin PA1 beschrieben wurden 140.0 g Aldehyd A1 mit 26.0 g MXDA umgesetzt. Nach Entfernen der flüchtigen Bestandteile bei 80 °C im Wasserstrahlvakuum erhielt man ein bei Raumtemperatur flüssiges Reaktionsprodukt, das völlig geruchsfrei war und einen Aldimin-Gehalt, bestimmt als Amin-Gehalt, von 2.33 mmol NH₂/g aufwies.
IR: 2954, 2922, 2853, 1737 (C=O), 1668 (C=N), 1608, 1466, 1395, 1374, 1367, 1302, 1249, 1232, 1158, 1113, 1020, 1006, 920, 781, 744, 722, 701.

### Beispiel 12 (Polyaldimin PA6)

Wie für Polyaldimin PA1 beschrieben wurden 161.0 g Aldehydgemisch A5 mit 33.0 g MPMD umgesetzt. Nach Entfernen der flüchtigen Bestandteile bei 80 °C im Wasserstrahlvakuum erhielt man ein bei Raumtemperatur flüssiges Reaktionsprodukt, das völlig geruchsfrei war und einen Aldimin-Gehalt, bestimmt als Amin-Gehalt, von 3.05 mmol NH₂/g und eine Viskosität bei 20 °C von 13'000 mPa·s aufwies.

### Beispiel 13 (Polyaldimin PA7)

Wie für Polyaldimin PA1 beschrieben wurden 141.0 g Aldehyd A6 mit 23.2 g HDA umgesetzt. Nach Entfernen der flüchtigen Bestandteile bei 80 °C im Wasserstrahlvakuum erhielt man ein bei Raumtemperatur flüssiges Reaktionsprodukt, das völlig geruchsfrei war und einen Aldimin-Gehalt, bestimmt als Amin-Gehalt, von 2.50 mmol NH₂/g aufwies.
IR: 2954, 2923, 2853, 1737 (C=O), 1669 (C=N), 1466, 1395, 1374, 1248, 1230, 1157, 1112, 1020, 1004, 933, 722.

### Beispiel 14 (Polyaldimin PA8) (Vergleich)

In einem Rundkolben wurden 100.0 g Jeffamine^{®} D-230 vorgelegt. Unter guter Kühlung und kräftigem Rühren wurden aus einem Eintropftrichter 75.0 g Isobutyraldehyd zugegeben. Nach 12 Stunden Rühren wurden die flüchtigen Bestandteile abdestilliert. Das so erhaltene, bei Raumtemperatur flüssige Reaktionsprodukt hatte einen sehr starken Aldehyd-Geruch und wies einen Aldimin-Gehalt, bestimmt als Amin-Gehalt, von 5.66 mmol NH₂/g auf.

### Beispiel 15 (Polyaldimin PA9) (Vergleich)

In einem Rundkolben wurden 62.0 g Jeffamine^{®} D-230 vorgelegt. Unter guter Kühlung und kräftigem Rühren wurden aus einem Eintropftrichter 89.5 g 2,2-Dimethyl-3-isobutyroxy-propanal zugegeben. Nach 10 Minuten Rühren wurden die flüchtigen Bestandteile abdestilliert. Das so erhaltene, bei Raumtemperatur flüssige Reaktionsprodukt hatte einen starken Aldehyd-Geruch und wies einen Aldimin-Gehalt, bestimmt als Amin-Gehalt, von 3.58 mmol NH₂/g auf.

### Beispiel 16 (Polyaldimin PA10) (Vergleich)

Wie für Polyaldimin PA9 beschrieben wurden 45.0 g MXDA mit 115.0 g 2,2-Dimethyl-3-isobutyroxy-propanal umgesetzt. Das so erhaltene, bei Raumtemperatur flüssige Reaktionsprodukt hatte einen starken Aldehyd-Geruch und wies einen Aldimin-Gehalt, bestimmt als Amin-Gehalt, von 4.43 mmol NH₂/g auf.

### Resultate: Eigenschaften der Polyaldimine

In Tabelle 1 wird dargestellt, wie stark ein allfälliger Geruch der beschriebenen Polyaldimine wahrnehmbar ist, einerseits beim Riechen am hergestellten Produkt ("Geruch nach Herstellung") und andererseits bei der Hydrolyse, also bei der Freisetzung des jeweiligen Aldehyds ("Geruch nach Hydrolyse").

**Tabelle 1: Geruch der Polyaldimine.**

| **Polyaldimin** | **PA1** | **PA2** | **PA3** | **PA4** | **PA5** | **PA6** | **PA7** | **PA8 Ref.*** | **PA9 Ref.*** | **PA10 Ref.*** |
|---|---|---|---|---|---|---|---|---|---|---|
| Geruch nach Herstellung | kein | kein | kein | kein | kein | kein | kein | sehr stark | stark | stark |
| Geruch nach Hydrolyse | kein | kein | kein | kein | kein | kein | kein | sehr stark | stark | stark |

| | | | | | | | | | | |
|---|---|---|---|---|---|---|---|---|---|---|
| *Ref. = Vergleich | | | | | | | | | | |

Die erfindungsgemässen Polyaldimine PA1 bis PA7 weisen keinen Geruch auf, weder vor noch nach der Hydrolyse. Die als Vergleich angeführten Polyaldimine PA8 bis PA10 riechen hingegen alle stark bis sehr stark, sowohl PA8, welcher Isobutyraldehyd freisetzt, als auch PA9 und PA10, welche beide nach US 4,469,831 hergestellt wurden und 2,2-Dimethyl-3-isobutyroxypropanal freisetzen.

### Beispiele für Verwendung der Polyaldimine

Als Beispiele für eine mögliche Verwendung der erfindungsgemässen Polyaldimine seien im Folgenden die Verwendung in Isocyanatgruppen enthaltenden Zusammensetzungen aufgeführt.

Für die Herstellung der Zusammensetzungen Z1 bis Z11 wurden die Polyurethanprepolymere PP1 und PP2 eingesetzt, deren Herstellung nachfolgend beschrieben ist:

### Polyurethanprepolymer PP1

259 g Polyol Acclaim^{®} 4200 N, 517 g Polyol Caradol^{®} MD34-02, 124 g 4,4'-Methylendiphenyldiisocyanat (MDI; Desmodur^{®} 44 MC L, Bayer) und 100 g Diisodecylphthalat wurden nach bekanntem Verfahren bei 80 °C zu einem NCO-terminierten Polyurethanprepolymeren umgesetzt. Das Reaktionsprodukt hatte einen titrimetrisch bestimmten Gehalt an freien Isocyanat-Gruppen von 2.30%, bezogen auf das Polyurethanprepolymer, und eine Viskosität bei 20 °C von 56 Pa·s.

### Polyurethanprepolymer PP2

845 g Polyol Acclaim^{®} 4200 N und 115 g 4,4'-Methylendiphenyldiisocyanat (MDI; Desmodur^{®} 44 MC L, Bayer) wurden nach bekanntem Verfahren bei 80 °C zu einem NCO-terminierten Polyurethanprepolymeren umgesetzt. Das Reaktionsprodukt hatte einen titrimetrisch bestimmten Gehalt an freien Isocyanat-Gruppen von 1.96% und eine Viskosität bei 20 °C von 37 Pa·s.

### Beispiel 17 (PUR-Zusammensetzungen Z1 bis Z7)

Die in der Tabelle 2 aufgeführten Polyurethanprepolymere und Polyaldimine wurden im angegebenen NH₂/NCO-Verhältnis (d.h. Equivalente Aldimingruppen pro Equivalente Isocyanatgruppen des Polyurethanprepolymers) homogen vermischt. Die Mischung wurde jeweils mit Benzoesäure (200 mg/100 g Polyurethanprepolymer) versetzt, erneut homogen gemischt und sofort in luftdichte Tuben abgefüllt und diese während 15 Stunden bei 60 °C gelagert. Dann wurde jeweils ein Teil der Mischung in ein mit PTFE beschichtetes Blech gegossen (Filmdicke ca. 2 mm), während 7 Tagen bei 23 °C und 50% relativer Luftfeuchtigkeit ausgehärtet und anschliessend die mechanischen Eigenschaften des durchgehärteten Films gemessen. Mit dem verbleibenden Tubeninhalt wurde die Lagerstabilität bestimmt durch Messung der Viskosität vor und nach Lagerung während 7 Tagen bei 60 °C. Die Ergebnisse der Prüfungen sind in Tabelle 2 aufgeführt.

**Tabelle 2: Polyurethanzusammensetzungen mit den erfindungsgemässen Polyaldiminen.**

| **PUR-Zusammensetzung** | **Z1** | **Z2** | **Z3** | **Z4** | **Z5** | **Z6** | **Z7** |
|---|---|---|---|---|---|---|---|
| Polyurethanprepolymer | PP1 | PP1 | PP1 | PP1 | PP2 | PP2 | PP1 |
| Polyaldimin | PA1 | PA2 | PA3 | PA4 | PA5 | PA6 | PA7 |
| NH₂/NCO-Verhältnis | 0.5/1 | 0.5/1 | 0.5/i | 0.5/1 | 0.7/1 | 0.7/1 | 0.5/1 |
| Viskosität vor Lagerung (Pa·s) | 50 | 66 | 55 | 70 | 32 | 36 | 48 |
| Viskosität nach Lagerung (Pa·s) | 59 | 79 | 58 | 81 | 37 | 43 | 57 |
| Hautbildungszeit (Min.) | 35 | 38 | 32 | 45 | 40 | 50 | 35 |
| Blasenbildung | keine | keine | keine | keine | keine | keine | keine |
| Zugfestigkeit (MPa) | 1.3 | 1.2 | 2.0 | 1.1 | 9.1 | 3.0* | 1.4 |
| Bruchdehnung (%) | 150 | 160 | 160 | 130 | 1300 | >1300 | 150 |
| Geruch bei Applikation | keiner | keiner | keiner | keiner | keiner | keiner | keiner |
| Geruch nach 7 Tagen | keiner | keiner | keiner | keiner | keiner | keiner | keiner |

| | | | | | | | |
|---|---|---|---|---|---|---|---|
| *Wert bei max. Dehnung (1300%) | | | | | | | |

Die Ergebnisse der Tabelle 2 zeigen, dass die Zusammensetzungen Z1 bis Z7, welche die erfindungsgemässen Polyaldimine PA1 bis PA7 enthalten, alle lagerstabil sind, eine gute Reaktivität (Hautbildungszeit) aufweisen und blasenfrei aushärten. Sie verfügen im ausgehärteten Zustand über gute mechanische Eigenschaften und geben dabei weder bei der Applikation noch später einen störenden Geruch ab.

### Beispiel 18 (PUR-Zusammensetzungen Z8 bis Z11) (Vergleich)

Das Beispiel 18 (Vergleich) wurde analog zum Beispiel 17 durchgeführt, wobei jedoch die nach dem Stand der Technik hergestellten Polyaldimine PA8 bis PA10 eingesetzt wurden. Die Ergebnisse der Prüfungen sind in der Tabelle 3 aufgeführt.

**Tabelle 3: Polyurethanzusammensetzungen, hergestellt nach dem Stand der Technik.**

| **PUR-Zusammensetzung** | **Z8** **Vergleich** | **Z9** **Vergleich** | **Z10** **Vergleich** | **Z11** **Vergleich** |
|---|---|---|---|---|
| Polyurethanprepolymer | PP1 | PP1 | PP2 | PP1 |
| Polyaldimin | PA8 | PA9 | PA10 | - |
| NH₂/NCO-Verhältnis | 0.5/1.0 | 0.5/1.0 | 0.7/1.0 | - |
| Viskosität vor Lagerung (Pa·s) | - (geliert) | 48 | 34 | 56 |
| Viskosität nach Lagerung (Pa·s) | - (geliert) | 58 | 38 | 61 |
| Hautbildungszeit (Min.) | 25 | 29 | 40 | >600 |
| Blasenbildung | keine | keine | keine | sehr stark |
| Zugfestigkeit (MPa) | n.m. | 1.2 | 7.5 | n.m. |
| Bruchdehnung (%) | n.m. | 150 | 1300 | n.m. |
| Geruch bei Applikation | sehr stark | stark | stark | keiner |
| Geruch nach 7 Tagen | schwach | stark | stark | keiner |

| | | | | |
|---|---|---|---|---|
| (n.m. = nicht messbar) | | | | |

Die Ergebnisse der Tabelle 3 zeigen, dass die Polyurethanzusammensetzung Z8, welche das Polyaldimin PA8 enthält, nicht lagerstabil ist. Die Mischung war schon vor der ersten Viskositätsmessung geliert. Zudem weist Z8 bei der Applikation einen sehr starken Geruch auf.
Die nach US 4,469,831 formulierten Polyurethanzusammensetzungen Z9 und Z10 weisen zwar eine gute Lagerstabilität und Reaktivität auf und verfügen im ausgehärteten Zustand über gute mechanische Eigenschaften; der bei der Hydrolyse freigesetzte Aldehyd verursacht jedoch einen starken, lange anhaltenden Geruch, welcher für viele Anwendungen nicht akzeptabel ist.
Die keinen latenten Härter enthaltende Polyurethanzusammensetzung Z11 ist zwar geruchsfrei und auch lagerstabil; die Reaktivität ist jedoch gering (sehr lange Hautbildungszeit), und bei der Aushärtung bilden sich viele Blasen, so dass die effektiven mechanischen Eigenschaften der ausgehärteten Zusammensetzung nicht bestimmt werden konnten.

## Patentansprüche

1. Polyaldimin, welches erhältlich ist aus
mindestens einem Polyamin **A** mit aliphatischen primären Aminogruppen
und
mindestens einem Aldehyd **B** der Formel 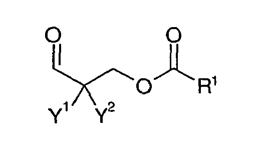 wobei Y¹ und Y² entweder
unabhängig voneinander für eine Alkyl-, Aryl oder Arylalkylgruppe stehen, welche gegebenenfalls jeweils substituiert sein können, gegebenenfalls jeweils Heteroatome enthalten können und gegebenenfalls jeweils ungesättigte Anteile enthalten können;
oder Y¹ und Y²
miteinander zu einem carbocyclischen oder heterocyclischen Ring verbunden sind, welcher eine Ringgrösse zwischen 5 und 8, bevorzugt 6, Atomen, und gegebenenfalls eine oder zwei einfach ungesättige Bindungen aufweist;
und
R¹ entweder
für eine lineare oder verzweigte Alkylkette mit 11 bis 30 C-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 C-Atomen steht;
oder für 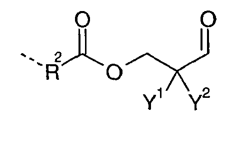 steht;
oder für 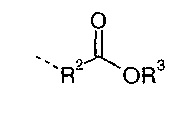 steht;
wobei R² für eine lineare oder verzweigte oder cyclische Alkylenkette mit 2 bis 16 C-Atomen, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette mit 2 bis 16 C-Atomen steht, und R³ für eine lineare oder verzweigte Alkylkette mit 1 bis 8 C-Atomen steht.

2. Polyaldimin gemäss Anspruch 1, **dadurch gekennzeichnet, dass** das Polyamin **A** mit aliphatischen primären Aminogruppen ausgewählt ist aus der Gruppe bestehend aus 1,6-Hexamethylendiamin, MPMD, DAMP, IPDA, 2,2,4- und 2,4,4-Trimethylhexamethylendiamin, 4-Aminomethyl-1,8-octandiamin, 1,3- und 1,4-Xylylendiamin, 1,3- und 1,4-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricydo[5.2.1.0^{2,6}] decan, 1,2-, 1,3- und 1,4-Diaminocyclohexan, Polyoxyalkylen-Polyamine mit theoretisch zwei oder drei Aminogruppen, insbesondere Jeffamine^{®} EDR-148, Jeffamine^{®} D-230, Jeffamine^{®} D-400 und Jeffamine^{®} T-403, sowie Mischungen von zwei oder mehr der vorgenannten Polyamine.

3. Polyaldimin gemäss einem der vorhergehenden Ansprüche, **dadurch gekennzeichnet, dass** der für die Herstellung des Polyaldimins verwendete Aldehyd **B** durch eine Veresterungsreaktion eines β-Hydroxyaldehyds mit einer Carbonsäure erhältlich ist, insbesondere ohne Verwendung eines Lösemittels, wobei der β-Hydroxyaldehyd, gegebenenfalls in situ, aus Formaldehyd, beziehungsweise Paraformaldehyd, und einem zweiten Aldehyd hergestellt wird, wobei dieser zweite Aldehyd ausgewählt ist aus der Gruppe umfassend Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd und Diphenylacetaldehyd, bevorzugt Isobutyraldehyd.

4. Polyaldimin gemäss Anspruch 3, **dadurch gekennzeichnet, dass** die für die Herstellung des Aldehyds **B** verwendete Carbonsäure ausgewählt ist aus der Gruppe umfassend Laurinsäure, Myristinsäure, Palmitinsäure, Stearinsäure, Ölsäure, Linolsäure, Linolensäure, Bernsteinsäure, Adipinsäure, Azelainsäure und Sebacinsäure.

5. Polyaldimin gemäss einem der vorhergehenden Ansprüche, **dadurch gekennzeichnet, dass** für die Herstellung des Polyaldimins der Aldehyd **B** stöchiometrisch oder im stöchiometrischen Überschuss in Bezug auf die primären Aminogruppen des Polyamins **A** eingesetzt wird.

6. Polyaldimin gemäss einem der vorhergehenden Ansprüche, **dadurch gekennzeichnet, dass** Y¹ = Y² = Methyl darstellt.

7. Verfahren zur Herstellung eines Polyaldimins gemäss einem der Ansprüche 1 - 6, umfassend eine Umsetzung eines Aldehyds **B** mit einem Polyamin **A** mit aliphatischen primären Aminogruppen.

8. Verfahren zur Herstellung eines Polyaldimins gemäss Anspruch 7, umfassend zusätzlich einen Schritt der Herstellung eines Aldehyds **B** aus einer Carbonsäure und einem β-Hydroxyaldehyd, insbesondere ohne Verwendung eines Lösemittels, wobei der β-Hydroxyaldehyd, gegebenenfalls in situ, aus Formaldehyd, beziehungsweise Paraformaldehyd oder oligomeren Formen von Formaldehyd, und einem zweiten Aldehyd hergestellt wird.

9. Verfahren zur Herstellung eines Polyaldimins gemäss Anspruch 7, umfassend zusätzlich einen Schritt der Herstellung eines Aldehyds **B** aus einer Carbonsäure und 3-Hydroxypivalaldehyd, insbesondere ohne Verwendung eines Lösemittels, wobei 3-Hydroxypivalaldehyd, gegebenenfalls in situ, aus Formaldehyd, beziehungsweise Paraformaldehyd, und Isobutyraldehyd hergestellt wird.

10. Verfahren zur Herstellung eines Polyaldimins gemäss Anspruch 7, 8 oder 9, **dadurch gekennzeichnet, dass** bei der Herstellung des Polyaldimins und/oder des Aldehyds keine Lösemittel eingesetzt werden.

11. Verwendung eines Polyaldimins gemäss einem der Ansprüche 1 - 6 in Zusammensetzungen, welche gegenüber Aminen reaktive Komponenten enthalten.

12. Verwendung eines Polyaldimins gemäss Anspruch 11, **dadurch gekennzeichnet, dass** die gegenüber Aminen reaktiven Komponenten Isocyanatgruppen sind.

13. Verwendung eines Polyaldimins gemäss Anspruch 11 oder 12, **dadurch gekennzeichnet, dass** die Zusammensetzung eingesetzt wird als Klebstoff, Dichtstoff, Beschichtung oder Belag.

14. Hydrolyseverfahren, **dadurch gekennzeichnet, dass** ein Polyaldimin gemäss einem der Ansprüche 1 - 6 mit Wasser in gasförmigem Aggregatszustand, insbesondere in Form von Luftfeuchtigkeit, in Kontakt gebracht wird, wobei Aldehyd **B** freigesetzt wird.

15. Hydrolyseverfahren, **dadurch gekennzeichnet, dass** ein Polyaldimin gemäss einem der Ansprüche 1 - 6 mit Wasser in Form einer wasserhaltigen Komponente oder einer Wasser freisetzenden Komponente in Kontakt gebracht wird, wobei Aldehyd **B** freigesetzt wird.

16. Hydrolyseverfahren gemäss Anspruch 14 oder 15, wobei das Polyaldimin in einer Zusammensetzung vorliegt, welche gegenüber Aminen reaktive Komponenten enthält.

## Claims

1. A polyaldimine which is obtainable from
at least one polyamine **A** having aliphatic primary amino groups
and
at least one aldehyde **B** of the formula 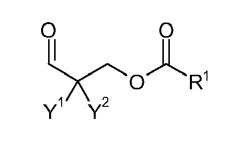 where Y¹ and Y² either
independently of one another are an alkyl, aryl or arylalkyl group, which if desired may in each case be substituted, if desired may in each case contain heteroatoms and if desired may in each case contain unsaturated components;
or Y¹ and Y²
are connected to one another to form a carbocyclic or heterocyclic ring which has a ring size of between 5 and 8, preferably 6, atoms and if desired contains one or two singly unsaturated bonds;
and
R¹ stands either
for a linear or branched alkyl chain having 11 to 30 carbon atoms, with or without at least one heteroatom, in particular with at least one ether oxygen, or for a singly or multiply unsaturated linear or branched hydrocarbon chain having 11 to 30 carbon atoms;
or for 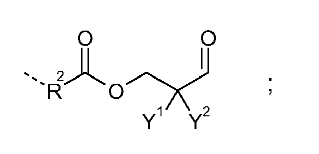 or for 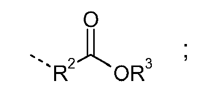 where R² is a linear or branched or cyclic alkylene chain having 2 to 16 carbon atoms, with or without at least one heteroatom, in particular with at least one ether oxygen, or is a singly or multiply unsaturated linear or branched or cyclic hydrocarbon chain having 2 to 16 carbon atoms,
and
R³ is a linear or branched alkyl chain having 1 to 8 carbon atoms.

2. The polyaldimine as claimed in claim 1, **characterized in that** the polyamine **A** having aliphatic primary amino groups is selected from the group consisting of 1,6-hexamethylenediamine, MPMD, DAMP, IPDA, 2,2,4- and 2,4,4-trimethylhexamethylenediamine, 4-aminomethyl-1,8-octanediamine, 1,3- and 1,4-xylylenediamine, 1,3- and 1,4-bis-(aminomethyl)cyclohexane, bis(4-aminocyclohexyl)methane, bis-(4-amino-3-methylcyclohexyl)methane, 3(4),8(9)-bis(aminomethyl)-tricyclo[5.2.1.0^{2,6}]decane, 1,2-, 1,3- and 1,4-diaminocyclohexane, polyoxyalkylene polyamines having in theory two or three amino groups, especially Jeffamine® EDR-148, Jeffamine® D-230, Jeffamine® D-400 and Jeffamine® T-403, and also mixtures of two or more of the aforementioned polyamines.

3. The polyaldimine as claimed in either of the preceding claims, **characterized in that** the aldehyde **B** used for preparing the polyaldimine is obtainable by means of an esterification reaction of a β-hydroxy aldehyde with a carboxylic acid, in particular without use of a solvent, the β-hydroxy aldehyde being prepared, in situ if appropriate, from formaldehyde, and/or paraformaldehyde, and from a second aldehyde, this second aldehyde being selected from the group consisting of isobutyraldehyde, 2-methylbutyraldehyde, 2-ethylbutyraldehyde, 2-methylvaleraldehyde, 2-ethylcaproaldehyde, cyclopentanecarboxaldehyde, cyclohexanecarboxaldehyde, 1,2,3,6-tetrahydrobenzaldehyde, 2-methyl-3-phenylpropionaldehyde, 2-phenylpropionaldehyde and diphenylacetaldehyde, preferably isobutyraldehyde.

4. The polyaldimine as claimed in claim 3, **characterized in that** the carboxylic acid used for preparing the aldehyde **B** is selected from the group consisting of lauric acid, myristic acid, palmitic acid, stearic acid, oleic acid, linoleic acid, linolenic acid, succinic acid, adipic acid, azelaic acid and sebacic acid.

5. The polyaldimine as claimed in any one of the preceding claims, **characterized in that** for preparing the polyaldimine the aldehyde **B** is used stoichiometrically or in a stoichiometric excess in relation to the primary amino groups of the polyamine **A**.

6. The polyaldimine as claimed in any one of the preceding claims, **characterized in that** Y¹ = Y² = methyl.

7. A process for preparing a polyaldimine as claimed in any one of claims 1-6, comprising reacting an aldehyde **B** with a polyamine **A** having aliphatic primary amino groups.

8. The process for preparing a polyaldimine as claimed in claim 7, further comprising a step of preparing an aldehyde **B** from a carboxylic acid and a β-hydroxy aldehyde, in particular without use of a solvent, the β-hydroxy aldehyde being prepared, in situ if appropriate, from formaldehyde, and/or paraformaldehyde or oligomeric forms of formaldehyde, and from a second aldehyde.

9. The process for preparing a polyaldimine as claimed in claim 7, further comprising a step of preparing an aldehyde **B** from a carboxylic acid and 3-hydroxypivalaldehyde, in particular without use of a solvent, 3-hydroxypivalaldehyde being prepared, in situ if appropriate, from formaldehyde, and/or paraformaldehyde, and from isobutyraldehyde.

10. The process for preparing a polyaldimine as claimed in claim 7, 8 or 9, **characterized in that** no solvents are used during the preparation of the polyaldimine and/or of the aldehyde.

11. The use of a polyaldimine as claimed in any one of claims 1-6 in compositions which comprise components that are reactive toward amines.

12. The use of a polyaldimine as claimed in claim 11, **characterized in that** the components that are reactive toward amines are isocyanate groups.

13. The use of a polyaldimine as claimed in claim 11 or 12, **characterized in that** the composition is used as an adhesive, sealant, coating or covering.

14. A hydrolysis process **characterized in that** a polyaldimine as claimed in any one of claims 1-6 is brought into contact with water in the gaseous aggregate state, in particular in the form of atmospheric moisture, and aldehyde **B** is released.

15. A hydrolysis process **characterized in that** a polyaldimine as claimed in any one of claims 1-6 is brought into contact with water in the form of a water-containing component or a water-releasing component, and aldehyde **B** is released.

16. The hydrolysis process as claimed in claim 14 or 15, wherein the polyaldimine is present in a composition which comprises components that are reactive toward amines.

## Revendications

1. Polyaldimine, pouvant être obtenue à partir d'au moins une polyamine A comportant des groupes amino primaires aliphatiques, et d'au moins un aldéhyde B de formule : 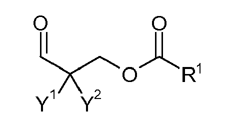 dans laquelle Y¹ et Y², ou bien représentent chacun indépendamment de l'autre un groupe alkyle, aryle ou arylalkyle, qui éventuellement peuvent chacun être substitué, qui éventuellement peuvent chacun contenir des hétéroatomes, et qui éventuellement peuvent chacun contenir des fragments insaturés ;
ou bien Y¹ et Y² sont liés l'un à l'autre pour donner un noyau carbocyclique ou hétérocyclique, qui présente un développement du cycle compris entre 5 et 8 atomes, et ayant de préférence 6 atomes, et qui éventuellement comprend une ou deux liaisons monoinsaturées ; et
R¹ ou bien représente une chaîne alkyle droite ou ramifiée ayant 11 à 30 atomes de carbone, éventuellement avec au moins un hétéroatome, en particulier avec au moins un oxygène d'éther, ou une chaîne hydrocarbonée droite ou ramifiée mono- ou polyinsaturée ayant 11 à 30 atomes de carbone ;
ou bien 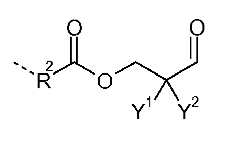 représente;
ou bien 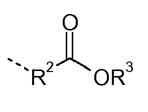 représente;
où R² est une chaîne alkylène droite ou ramifiée, ou cyclique, ayant 2 à 16 atomes de carbone, comportant éventuellement au moins un hétéroatome, en particulier au moins un oxygène d'éther, ou une chaîne hydrocarbonée droite ou ramifiée, ou cyclique, mono- ou polyinsaturée, ayant 2 à 16 atomes de carbone, et R³ est une chaîne alkyle droite ou ramifiée ayant 1 à 8 atomes de carbone.

2. Polyaldimine selon la revendication 1, **caractérisée en ce que** la polyamine A comportant des groupes amino primaires aliphatiques est choisie dans le groupe consistant en la 1,6-hexaméthylènediamine, le MPMD, le DAMP, l'IPDA, la 2,2,4- et la 2,4,4-triméthylhexaméthylènediamine, la 4-aminométhyl-1,8-octanediamine, la 1,3- et la 1,4-xylylènediamine, le 1,3- et le 1,4-bis(aminométhyl)cyclohexane, le bis(4-aminocyclohexyl)-méthane, le bis(4-amino-3-méthylcyclohexyl)-méthane, le 3(4),8(9)-bis(aminométhyl)-tricyclo[5.2.1.0^{2,6}]décane, le 1,2-, le 1,3- et le 1,4-diaminocyclohexane, les polyalkylène-polyamines ayant en théorie deux ou trois groupes amino, en particulier le Jeffamine^{®} EDR-148, le Jeffamine^{®} D-230, le Jeffamine^{®} D-400 et le Jeffamine^{®} T-403, et les mélanges d'au moins deux des polyamines mentionnées ci-dessus.

3. Polyaldimine selon l'une des revendications précédentes, **caractérisée en ce que** l'aldéhyde B utilisé pour la préparation de la polyaldimine peut être obtenu par une réaction d'estérification d'un β-hydroxyaldéhyde avec un acide carboxylique, en particulier sans utilisation d'un solvant, le β-hydroxyaldéhyde étant, éventuellement in situ, préparé à partir de formaldéhyde ou de paraformaldéhyde et d'un deuxième aldéhyde, ce deuxième aldéhyde étant choisi dans le groupe consistant en l'isobutyraldéhyde, le 2-méthylbutyraldéhyde, le 2-éthylbutyraldéhyde, le 2-méthylvaléraldéhyde, le 2-éthylcapronaldéhyde, le cyclopentanecarboxaldéhyde, le cyclohexanecarboxaldéhyde, le 1,2,3,6-tétrahydrobenzaldéhyde, le 2-méthyl-3-phénylpropionaldéhyde, le 2-phénylpropionaldéhyde et le diphénylacétaldéhyde, de préférence l'isobutyraldéhyde.

4. Polyaldimine selon la revendication 3, **caractérisée en ce que** l'acide carboxylique utilisé pour la préparation de l'aldéhyde B est choisi dans le groupe consistant en l'acide laurique, l'acide myristique, l'acide palmitique, l'acide stéarique, l'acide oléique, l'acide linoléique, l'acide linolénique, l'acide succinique, l'acide adipique, l'acide azélaïque et l'acide sébacique.

5. Polyaldimine selon l'une des revendications précédentes, **caractérisée en ce que**, pour la préparation de la polyaldimine, l'aldéhyde B est utilisé selon des proportions stoechiométriques ou en excès stoechiométrique par rapport aux groupes amino primaires de la polyamine A.

6. Polyaldimine selon l'une des revendications précédentes, **caractérisée en ce que** Y¹ = Y² = méthyle.

7. Procédé de préparation d'une polyaldimine selon l'une des revendications 1 à 6, comprenant une réaction d'un aldéhyde B avec une polyamine A comportant des groupes amino primaires aliphatiques.

8. Procédé de préparation d'une polyaldimine selon la revendication 7, comprenant en outre une étape de préparation d'un aldéhyde B à partir d'un acide carboxylique et d'un β-hydroxyaldéhyde, en particulier sans utilisation d'un solvant, le β-hydroxyaldéhyde étant, éventuellement in situ, préparé à partir de formaldéhyde, ou de paraformaldéhyde ou de formes oligomères du formaldéhyde, et d'un deuxième aldéhyde.

9. Procédé de préparation d'une polyaldimine selon la revendication 7, comprenant en outre une étape de préparation d'un aldéhyde B à partir d'un acide carboxylique et de 3-hydroxypivalaldéhyde, en particulier sans utilisation d'un solvant, le 3-hydroxypivalaldéhyde étant, éventuellement in situ, préparé à partir de formaldéhyde ou de paraformaldéhyde, et d'isobutyraldéhyde.

10. Procédé de préparation d'une polyaldimine selon la revendication 7, 8 ou 9, **caractérisé en ce que**, lors de la préparation de la polyaldimine et/ou de l'aldéhyde, on n'utilise aucun solvant.

11. Utilisation d'une polyaldimine selon l'une des revendications 1 à 6 dans des compositions qui contiennent des composants réactifs vis-à-vis des amines.

12. Utilisation d'une polyaldimine selon la revendication 11, **caractérisée en ce que** les composants réactifs vis-à-vis des amines sont des groupes isocyanate.

13. Utilisation d'une polyaldimine selon la revendication 11 ou 12, **caractérisée en ce que** la composition est utilisée en tant qu'adhésif, matériau d'étanchéité, revêtement ou enduction.

14. Procédé d'hydrolyse, **caractérisé en ce qu'**on met en contact une polyaldimine selon l'une des revendications 1 à 6 avec de l'eau à l'état gazeux, en particulier sous forme d'humidité de l'air, ce à l'occasion de quoi il y a libération de l'aldéhyde B.

15. Procédé d'hydrolyse, **caractérisé en ce qu'**on met en contact une polyaldimine selon l'une des revendications 1 à 6 avec de l'eau sous forme d'un composant contenant de l'eau ou d'un composé libérant de l'eau, ce à l'occasion de quoi il y a libération de l'aldéhyde B.

16. Procédé d'hydrolyse selon la revendication 14 ou 15, dans lequel la polyaldimine est présente dans une composition qui contient des composants réactifs vis-à-vis des amines.
